(19) Europäisches Patentamt
European Patent Office
Office européen des brevets

(11) **EP 4 607 404 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **24158903.5**

(22) Anmeldetag: **21.02.2024**

(51) Internationale Patentklassifikation (IPC):
***G06K 7/14*** *(2006.01)*

(52) Gemeinsame Patentklassifikation (CPC):
**G06K 7/1473; G06K 7/1491**

(54) **LESEN EINES OPTISCHEN CODES**

READING AN OPTICAL CODE

LECTURE D'UN CODE OPTIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**27.08.2025 Patentblatt 2025/35**

(73) Patentinhaber: **SICK AG**
**79183 Waldkirch (DE)**

(72) Erfinder:
• **Steinbuch, Jonathan**
**Denzlingen (DE)**
• **Hallmann, Vicky**
**Freiburg (DE)**
• **Bär, Sofia**
**79331 Teningen (DE)**

(56) Entgegenhaltungen:
**EP-A1- 1 383 063       US-A1- 2002 041 712
US-B1- 6 394 349**

**Beschreibung**

Die Erfindung betrifft ein Verfahren zum Lesen eines optischen Codes nach dem Oberbegriff von Anspruch 1 und einen optoelektronischen Codeleser nach Anspruch 12.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation.

In einer wichtigen Anwendungsgruppe werden die codetragenden Objekte an dem Codeleser vorbei gefördert. Ein scannender Codeleser erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen. Auch ein scannender Codeleser erfasst die Remission und damit letztlich Bildzeilen, die zu einem Objektbild zusammengefügt werden können, auch wenn hierfür in der Praxis ein Bildsensor vorgezogen wird. In einem solchen Objektbild können Codebereiche identifiziert und ein- oder zweidimensionale Codes ausgelesen werden.

Für einen Codeleser oder einen Lesetunnel stellt eine hohe Leserate eines der wichtigsten Qualitätskriterien dar. Lesefehler zwingen zu aufwändigen Fehlerbehebungen, wie dem erneuten manuellen Abscannen oder einer Nachsortierung. In der Praxis treten jedoch häufig Defekte im Codebereich auf, die hier summarisch als Störstellen bezeichnet werden und die das Lesen erschweren oder verhindern. Dabei gibt es unterschiedliche Ursachen für eine Störstelle, wie eine mechanische Beanspruchung des Codes etwa durch Beschädigung, schlechten Druck oder Verschmutzung, eine Verdeckung von Codeteilen oder optische Beeinträchtigungen wie Reflexe, Unschärfe oder Kontrastarmut.

Um Lesefehler zu vermeiden, sind herkömmliche Decoder für zweidimensionale Codes wie DataMatrix, QR, Aztec, Maxicode, Dot-Code oder auch Stapelcodes wie PDF417 und MicroPDF mit einer Reed-Solomon-Korrektur ausgestattet. Das ermöglicht ein starkes Korrekturverfahren, mit dem Codes auch mit Störstellen häufig noch richtig gelesen werden. Wird allerdings die Fehlerkorrekturkapazität überschritten, beispielsweise bei zahlreichen oder größeren Störstellen, so ist auch mit einer Reed-Solomon-Korrektur kein Lesen des Codes mehr möglich.

In der EP 3 428 835 A1 wird ein Verfahren zum Lesen eines optischen Codes vorgestellt, bei dem in einer Vorkorrektur, die einem Prüfverfahren vorgelagert ist, an mindestens einer Position des Codes ein Codewort durch ein für diese Position bekanntes Codewort ersetzt wird. Die bekannten Codewörter sind parametriert, von einer Datenbank eines übergeordneten Systems vorgegeben oder aus einer Historie von gelesenen Codes eingelernt. Das ist eine Vorkorrektur, die dafür gedacht ist, eine nachfolgende Reed-Solomon-Korrektur zu ergänzen. Auf die Erkennung von Störstellen wird dabei aber nicht eingegangen.

In der US 6 685 095 B2 wird das Decodieren von beschädigten Codes diskutiert. Es wird erkannt, wenn erwartete Codemerkmale fehlen oder beschädigt sind, wie ein Finder Pattern oder eine Umrahmung. Solche Fehler werden dann für eine anschließende Reed-Solomon-Korrektur markiert, um deren Fehlerkorrekturkapazität zu erhöhen. Dieses Vorgehen ist zum einen nur mit bereits binarisierten, also schwarz-weißen Codebildern möglich, und daher empfindlich gegenüber Binarisierungsfehlern. Außerdem werden nur bestimmte Fehler erkannt, die sich auf die erwarteten Codemerkmale beziehen.

Aus der EP 1 383 063 A1 ist ein Verfahren zum Lesen eines Codes bekannt, der auf einem Mobiltelefon mehrfach in unterschiedlichen Orientierungen angezeigt wird. So wird sichergestellt, dass trotz einer möglichen lokalen Störung auf der Anzeige jeder Codebereich zumindest in einem Teil der Ansichten erfasst werden kann.

Die Arbeit von Sofair, Isaac, "Probability of miscorrection for reed-solomon codes", Proceedings International Conference on Information Technology: Coding and Computing (Cat. No. PR00540), IEEE, 2000 gibt Wahrscheinlichkeiten für Fehlkorrekturen eines Reed-Solomon-Verfahrens an. Das verbessert aber das Codelesen nicht.

Es ist daher Aufgabe der Erfindung, das Lesen von Codes mit Störstellen weiter zu verbessern.

Diese Aufgabe wird durch ein Verfahren zum Lesen eines optischen Codes nach Anspruch 1 und einen optoelektronischen Codeleser nach Anspruch 12 gelöst. Das Verfahren ist ein computerimplementiertes Verfahren, das beispielsweise in einer Recheneinheit eines Codelesers oder sonstigen die Bilddaten erfassenden Sensors und/oder einer angeschlossenen Recheneinheit abläuft. Der optische Code, vorzugsweise einer der einleitend genannten Codes mit Reed-Solomon-Korrekturwörtern und insbesondere ein 2D-Code, weist eine erste Vielzahl von Codewörtern auf. Ein Codewort wiederum setzt sich aus einer zweiten Vielzahl von Codemodulen zusammen, beispielsweise acht Codemodule, die jeweils einzeln über hell und dunkel ein Bit und gemeinsam ein Byte oder acht Bit des Codeworts codieren. Die Codewörter werden im Zuge des Lesens oder Decodierens in jeweilige Zeichen des durch den optischen Code vermittelten Codeinhalts übersetzt.

Um den Code zu lesen, werden zunächst auf einem der bekannten und einleitend beschriebenen Wege Bilddaten mit dem optischen Code aufgenommen. Es handelt sich genaugenommen nur um einen Codekandidaten, denn ob es ein lesbarer, vollständiger Code ist, stellt sich erst später heraus. Das wird hier begrifflich nicht unterschieden. Die Bilddaten werden vorzugsweise durch eine Vorverarbeitung auf einen Bereich des Codes zugeschnitten. Bezüglich der Bilddaten kann nun noch die Modulgröße definiert werden: Das ist die Ausdehnung eines Codemoduls in Bildpunkten der Bilddaten, die natürlich in anderen Einheiten angegeben werden und mit verschiedenen an sich bekannten Verfahren abgeschätzt werden kann.

In den Bilddaten mit dem optischen Code werden Störstellen bestimmt, wobei eine Störstelle einleitend schon eingeführt wurde und in dem von der Störstelle betroffenen Bereich der Bilddaten mindestens ein Codemodul nicht oder nicht verlässlich erkennbar ist. Die Bilddaten werden dann ausgewertet, vorzugsweise wie im Folgenden genauer erläutert unter Berücksichtigung der Störstellen, um die Codewörter zu lesen.

Die Erfindung geht von dem Grundgedanken aus, die Störstellen anhand eines Kantenkriteriums, eines Binarisierungskriteriums oder einer Kombination beider Kriterien zu bestimmen. Das Kantenkriterium stellt auf größere Bereiche ohne Kanten ab, die es ohne Störstellen wegen der zahlreichen Übergänge zwischen Codemodulen nicht geben dürfte. Dabei orientiert sich die Größe des kantenfreien Bereichs an der Modulgröße, denn innerhalb eines Codemoduls gibt es bestimmungsgemäß keine Kanten, und auch einige gleiche Codemodule neben- und übereinander führen zu Kantenfreiheit. Daher wird mit einem Vielfachen der Modulgröße gearbeitet, etwa dem zwei-, drei- oder sonstigen auch nichtganzzahligen Vielfachen, um so vorzugeben, wie viele gleiche Codemodule im selben Bereich noch als regulär anzusehen sind und ab welcher Größe ein kantenfreier Bereich auf eine Störstelle zurückgeführt wird. Das Binarisierungskriterium prüft, ob ein Codemodul bei einer schon erfolgten oder kommenden Binarisierung womöglich falsch klassifiziert wurde oder wird, also in binarisierten Bilddaten hell und in der Realität dunkel ist oder umgekehrt. Die Wahrscheinlichkeit für einen solchen Binarisierungsfehler ist umso höher, je näher die Grauwerte des Codemoduls an einer Binarisierungsschwelle liegen. Der hierfür geprüfte Bereich hat vorzugsweise ungefähr die Größe eines Codemoduls, da es in erster Linie auf die Grauwerte des geprüften Codemoduls ankommt, wobei aber der Kontrast zu benachbarten Codemodulen ebenfalls eine Rolle spielen und daher der Bereich auch etwas größer als ein Codemodul sein kann. Mit dem Binarisierungskriterium werden grauwertige Bilddaten auf Störstellen geprüft, d.h. es sind je Bildpunkt Helligkeiten beispielsweise im Intervall [0...255] quantifiziert, so dass in diesem Sinne auch rote, blaue, grüne oder sonstige farbige Bilddaten grauwertig genannt werden können. Das Kantenkriterium kann ebenfalls auf Grauwerte, alternativ auf binarisierte Werte angewandt werden.

Die Erfindung hat den Vorteil, dass Störstellen in dem zu lesenden optischen Code verlässlich erkannt werden. Die angewandten Kriterien sind nicht auf bestimmte Codemerkmale angewiesen, wie Finder Patterns oder eine äußere Codekontur. Das Kantenkriterium setzt eine zumindest weitgehend korrekte Detektion vorhandener Konturen voraus. Das Binarisierungskriterium bewertet insbesondere, ob diese Voraussetzung angenommen werden darf, also die Zuverlässigkeit der Konturdetektion, so dass die beiden Kriterien einander sehr gut ergänzen. Da somit bekannt ist, wo in dem optischen Code Störstellen vorliegen, kann in bevorzugten Ausführungsformen mit nachgelagerter Fehlerkorrektur markiert werden, welche Codemodule oder Codewörter von Störstellen betroffen sind. Die Fehlerkorrektur wiederum schöpft in Kenntnis von Anzahl und Position der Fehler ihre Fehlerkorrekturkapazität besser aus. Es werden effektiv doppelt so viele Fehler korrigierbar, als wenn die Fehlerkorrektur die Fehler selbst lokalisieren müsste.

Für die Bewertung mit dem Kantenkriterium wird bevorzugt eine Kantendetektion in den Bilddaten vorgenommen, insbesondere nachdem zuvor künstlich eine Unschärfe erzeugt wird. Die durch das Kantenkriterium zu bewertenden Kanten beziehungsweise die Kantenfreiheit von Bereichen werden dadurch leichter zugänglich. Um möglichst nur Kanten zwischen Codemodulen und keine Rauschartefakte zu detektieren, werden die Bilddaten vorzugsweise zuvor verwaschen, beispielsweise mit einem Gaußkern, dessen Kernelgröße sich an der Modulgröße orientiert. Die Kantendetektion erfolgt, wie schon angesprochen, vorzugsweise auf Grauwerten, es ist aber auch möglich, in binarisierten Bilddaten die Modulübergänge als Kanten heranzuziehen. Ein hierfür einsetzbares Verfahren ist der Canny-Algorithmus.

Es wird bevorzugt für mindestens einen Bildpunkt je Position eines Codemoduls der Abstand zu der nächsten Kante bestimmt, wobei das Kantenkriterium in dem jeweiligen Bildpunkt als erfüllt gilt, wenn der Abstand mindestens einem vorgegebenen Abstand entspricht. Dadurch entsteht eine Art Distanzbild, in dem jeder Bildpunkt den Abstand zur nächsten Kante beispielsweise in der 1-Norm oder der 2-Norm angibt. Das Distanzbild wird beispielsweise mit einer Distanztransformation nach Rosenfeld und Pfalz berechnet. In dem Distanzbild ist sehr einfach erkennbar, wie groß ein kantenfreier umgebender Bereich eines jeden Bildpunkts ist, so dass Störstellen gemäß dem Kantenkriterium durch eine Schwellenoperation mit einem vorgegebenen Abstand entsprechend der vorgegebenen Größe eines als Störstelle angesehenen kantenfreien Bereichs auffindbar werden. Die Distanz zu der nächsten Kante kann für alle Bildpunkte der aufgenommenen Bilddaten berechnet werden, oder es werden nur ein Bildpunkt oder wenige repräsentative Bildpunkte der jeweiligen Codemodule herangezogen. Das Raster der Codemodule ergibt sich aus der Modulgröße.

Das Binarisierungskriterium gilt bevorzugt an einem Bildpunkt als erfüllt, wenn der Grauwert des Bildpunktes innerhalb einer erwarteten Schwankungsbreite um die Binarisierungsschwelle bleibt, insbesondere innerhalb eines Bruchteils einer Standardabweichung der Grauwerte von Bildpunkten in einer Nachbarschaft des Bildpunktes. Die Binarisierungsschwelle wird üblicherweise aus einer Helligkeitsverteilung der Bilddaten geschätzt, global aus allen Grauwerten oder vorzugsweise lokal für eine jeweilige Nachbarschaft. In diesem Zuge lässt sich auch eine zugehörige globale oder lokale Schwankungsbreite, insbesondere Varianz oder Standardabweichung bestimmen. Diese Schwankungsbreite ist ein geeignetes Maß, um zu bewerten, wie nahe die Grauwerte eines Codemoduls an der Binarisierungsschwelle liegen. Bleiben die Grauwerte eines Codemoduls beispielsweise innerhalb einer Standardabweichung, einer halben Standardabweichung oder eines anderen Bruchteils der Standardabweichung, so betrachtet das Binarisierungskriterium die Binarisierung dieses Codemoduls als unzuverlässig, da schon kleine Fehler die Binarisierung in die andere Richtung nach hell oder dunkel kippen würden, und dies wiederum wird als Indiz für eine Störstelle angesehen.

Der optische Code wird vorzugsweise mit einem Fehlerkorrekturverfahren gelesen, insbesondere mit einem Reed-Solomon-Verfahren. Dadurch können optische Codes trotz der Störstellen noch korrekt gelesen werden. Soweit das Fehlerkorrekturverfahren über die Störstellen hinaus noch Fehlerkorrekturkapazitäten hat, können darüber hinaus zusätzliche Fehler anderer Ursachen korrigiert werden.

Dem Fehlerkorrekturverfahren werden bevorzugt als zusätzliche Eingangswerte die Störstellen mitgeteilt. Insbesondere wird für das Fehlerkorrekturverfahren markiert, welche Codemodule oder Codewörter korrigiert werden sollen. Das vereinfacht die Fehlerkorrektur und ermöglicht deshalb, zusätzliche Fehler zu korrigieren. Bei einem Reed-Solomon-Verfahren wird jeweils ein Korrekturwort benötigt, um einen Fehler zu lokalisieren, und ein zweites Korrekturwort, um den richtigen Wert an dieser Stelle zu finden. Werden die Fehler vorab markiert, so wird kein Korrekturwort mehr benötigt, um den jeweiligen Fehler zu lokalisieren. Die Fehlerkorrekturkapazität wird so allein für die eigentliche Fehlerkorrektur verfügbar, so dass effektiv doppelt so viele Fehler korrigierbar werden.

Dem Fehlerkorrekturverfahren werden bevorzugt eine Anzahl von Störstellen betroffene Codewörter entsprechend einer Fehlerkorrekturkapazität des Fehlerkorrekturverfahrens mitgeteilt. Die Anzahl korrigierbarer Fehler sei mit r bezeichnet. Das ist einerseits als Obergrenze zu verstehen, denn es wäre nicht sinnvoll, die Korrektur von mehr Fehlern zu fordern, weil klar ist, dass das Fehlerkorrekturverfahren damit nicht umgehen kann. Es ist zudem vorteilhaft, die Obergrenze auch auszuschöpfen, also so viele potentielle Störstellen mitzuteilen, wie korrigierbar sind. Das kann auch so ausgedrückt werden, dass die Kriterien für eine Störstelle gerade so streng gehalten werden, dass diese Obergrenze erreicht wird. Alternativ ist denkbar, weniger Störstellen mitzuteilen, insbesondere wenn die Kriterien gar nicht auf Störstellen oder nur wenige Störstellen hindeuten.

Vorzugsweise erfolgen mehrere Leseversuche mit dem Fehlerkorrekturverfahren, und dem Fehlerkorrekturverfahren werden in den Leseversuchen jeweils unterschiedliche von Störstellen betroffene Codewörter mitgeteilt. Sofern also die erste Auswahl von Codewörtern, die von Störstellen betroffen sind, noch nicht zu einem Leseerfolg führt, können noch andere Varianten ausprobiert werden. Dadurch kann eine verfügbare Decodierzeit sinnvoll genutzt werden, und die Leserate erhöht sich nochmals weiter.

Vorzugsweise wird nach einem Konfidenzwert entschieden, welche von Störstellen betroffene Codewörter dem Korrekturverfahren mitgeteilt werden. Die Störstellen beziehungsweise die davon betroffenen Codewörter werden somit anhand des Konfidenzwerts priorisiert. Beispielsweise wird eine Mindestschwelle an den Konfidenzwert angelegt, und unter den verbleibenden Störstellen wird eine $r_{max}$-Auswahl getroffen. Das sind insbesondere die $r_{max}$ Störstellen mit den höchsten Konfidenzwerten. Es ist denkbar, nacheinander eine Decodierung mit unterschiedlichen $r_{max}$-Auswahlen zu probieren, solange ein Leseerfolg ausbleibt und noch Decodierzeit zur Verfügung steht, die gerade in Echtzeitanwendungen begrenzt ist. Sollte es mehr als $r_{max}$ Störstellen hoher Konfidenz geben, so kann dies auch die Grundlage einer Entscheidung sein, dass dieser Code grundsätzlich nicht mehr lesbar ist.

Der Konfidenzwert wird bevorzugt aus dem Kantenkriterium und/oder dem Binarisierungskriterium berechnet. Somit können die beiden Kriterien einzeln oder gemeinsam herangezogen werden, um zu bewerten, ob ein Codewort als wegen einer Störstelle fehlerhaft anzusehen ist oder nicht.

Das Kantenkriterium trägt bevorzugt nach der Formel $1 - \left(\frac{1}{2}\right)^{n_1}$ zu dem Konfidenzwert bei, wobei $n_1$ die Anzahl der von einer Störstelle betroffenen Codemodule ist. Mit dieser Formel wird damit verglichen, dass zufällig nacheinander n1 gleiche Codemodule auftreten, als Teil eines regulären Codes und nicht durch Störstellen verursacht.

Das Binarisierungskriterium trägt bevorzugt umso mehr zu dem Konfidenzwert bei, je näher der Grauwert des mit dem Binarisierungskriterium betrachteten Bildpunktes an der Binarisierungsschwelle liegt. Der Konfidenzwert quantifiziert somit den Abstand zur Binarisierungsschwelle, sei es linear oder mit einer anderen Gewichtung. Ein Codemodul ist demnach umso wahrscheinlicher falsch binarisiert und somit als Störstelle anzusehen, je dichter dessen Grauwerte an die Binarisierungsschwelle herankommen.

In bevorzugter Weiterbildung ist ein optoelektronischer Codeleser, vorzugsweise kamerabasierter Codeleser, mit mindestens einem Lichtempfangselement zur Erzeugung von Bilddaten aus Empfangslicht und mit einer internen und/oder externen Steuer- und Auswertungseinheit vorgesehen, in der ein erfindungsgemäßes Verfahren zum Lesen von optischen Codes implementiert ist. Die Bilderfassung erfolgt, wie einleitend beschrieben, mit einem Bildsensor mit matrixförmig angeordneten Pixeln, mit einem Zeilensensor in Relativbewegung zum optischen Code oder scannend.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Übersichtsdarstellung eines Codelesers, der beispielhaft über einem Förderband montiert ist, auf dem Objekte mit zu lesenden optischen Codes gefördert werden;

Fig. 2    einen beispielhaften optischen Code mit einer hier großflächigen Störstelle;

Fig. 3    ein beispielhaftes Ablaufdiagramm zum Erkennen von Störstellen und Lesen von optischen Codes unter Berücksichtigung der Störstellen;

Fig. 4    eine Darstellung eines Kantenbildes zu dem optischen Code gemäß Figur 2;

Fig. 5    eine Darstellung einer auf das Kantenbild gemäß Figur 4 angewandten Distanztransformation; und

Fig. 6    eine Illustration der in dem optischen Code gemäß Figur 2 erkannten Störstelle.

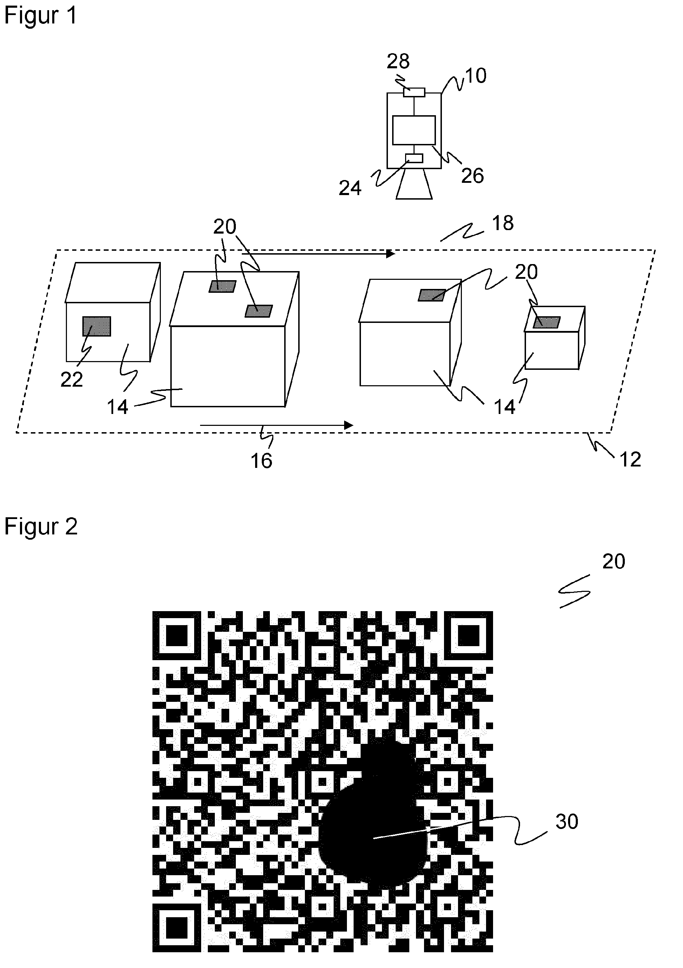

Figur 1 zeigt einen optoelektronischen Codeleser 10, der über einem Förderband 12 montiert ist, welches Objekte 14, wie durch den Pfeil 16 angedeutet, durch den Erfassungsbereich 18 des Codelesers 10 fördert. Die Objekte 14 tragen an ihren Außenflächen optische Codes 20, die von dem Codeleser 10 erfasst und ausgewertet werden. Die optischen Codes 20 sind vorzugsweise Codes mit einer Reed-Solomon-Codierung, wie einleitend schon beispielhaft angeführt, und sie sind auf beliebige Art aufgebracht, insbesondere direkt auf ein Objekt 14 gedruckt oder über ein Etikett aufgebracht.

Die optischen Codes 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber auf das Lesen von Codes beziehungsweise den Codeleser 10 selbst, so dass dieses Beispiel nicht einschränkend verstanden werden darf. Beispielsweise können Codes auch von Hand abgescannt, oder es kann in einer Präsentationsanwendung ein Code oder ein Objekt 14 mit einem Code in das Lesefeld des Codelesers 10 gehalten werden.

Der Codeleser 10 erfasst mit einem Lichtempfänger 24 Bilddaten der geförderten Objekte 14 und der optischen Codes 20, die von einer Steuer- und Auswertungseinheit 26 mittels Bildauswertung und Decodierverfahren weiterverarbeitet werden. Die Steuer- und Auswertungseinheit 26 umfasst beispielsweise mindestens einen Rechenbaustein wie einen Mikroprozessor oder eine CPU (Central Processing Unit), ein FPGA (Field Programmable Gate Array), einen DSP (Digital Signal Processor), ein ASIC (Application-Specific Integrated Circuit), einen KI-Prozessor, eine NPU (Neural Processing Unit), eine GPU (Graphics Processing Unit), eine VPU (Video Processing Unit) oder dergleichen. Es kommt ferner für die Erfindung nicht auf das konkrete Bildgebungsverfahren an, so dass der Codeleser 10 nach irgendeinem an sich bekannten Prinzip aufgebaut sein kann. Beispielsweise wird jeweils nur eine Zeile erfasst, sei es mittels zeilenförmigem Bildsensor oder einem Scanverfahren, und die Steuer- und Auswertungseinheit fügt die im Laufe der Förderbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist. Die zentrale Funktion des Codelesers 10 ist das Decodieren, d.h. das Lesen der in einem optischen Code codierten Botschaft als Klartext. Über eine Schnittstelle 28 gibt der Codeleser 10 Informationen aus, wie aus den Codes gelesene Botschaften oder Bilddaten.

Nachstehend wird unter Bezugnahme auf die Figuren 2 bis 6 das Erkennen von Störstellen vorzugsweise mit nachfolgendem Lesen eines optischen Codes 20 erläutert. Dies erfolgt in einer bevorzugten Ausführungsform in der Steuer- und Auswertungseinheit 26.

Ebenso ist aber denkbar, Bilddaten oder Zwischenergebnisse über die Schnittstelle 28 auszugeben und zumindest einen Teil der Erkennung von Störstellen und Decodierung in ein übergeordnetes System auszulagern, wie einen Steuerungsrechner, ein Netzwerk oder eine Cloud. Vorverarbeitungen der Bilddaten zur Segmentierung und zum Auffinden von Codebereichen mit den optischen Codes 20 sowie die Fehlerkorrektur insbesondere mittels Reed-Solomon-Verfahrens und die Decodierung an sich werden als bekannt vorausgesetzt und nicht im Einzelnen beschrieben.

Figur 2 zeigt einen beispielhaften optischen Code 20 mit einer Störstelle 30. In diesem Fall handelt es sich um eine Auslöschung (Erasure). Die eigentliche Ursache für die Störstelle 30 ist für die Erfindung nicht relevant, beispielhaft kann die Störstelle 30 auf den optischen Code 20 selbst, wie einen Fehldruck, eine Verschmutzung, eine Verdeckung oder eine Reflexion, die Aufnahmesituation oder den Codeleser 10 zurückzuführen sein. Die Störstelle 30 ist hauptsächlich zur Illustration zusammenhängend und in diesem Ausmaß dargestellt, erfindungsgemäß werden mehrere wie kleinere Störstellen 30 ebenso erkannt. Es ist demnach als Beispiel zu verstehen, wobei es auch nicht darauf ankommt, ob der optische Code 20 bei einer derart ausgedehnten Störstelle 30 noch lesbar ist. Dies zu erkennen kann im Gegenteil ein Vorteil des erfindungsgemäßen Vorgehens sein.

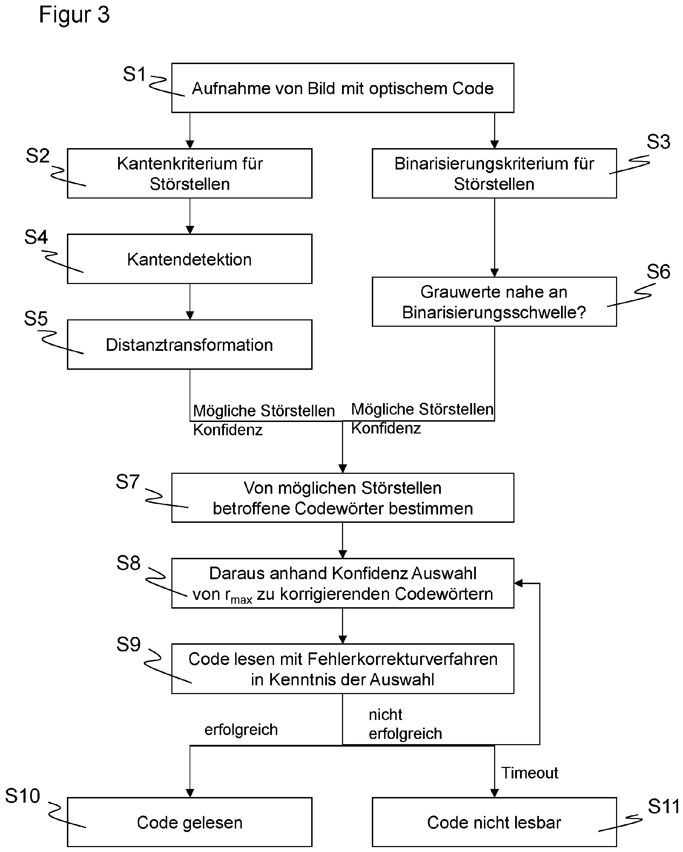

Figur 3 zeigt ein beispielhaftes Ablaufdiagramm zum Erkennen von Störstellen 30 und Lesen von optischen Codes 20 unter Berücksichtigung der Störstellen 30. Als optischer Code 20 wird der gesamte Code bezeichnet, was im Zusammenhang mit Codelesen auch Symbol genannt wird. Ein Codewort ist ein einzelnes Zeichen des optischen Codes 20, das sich beispielsweise aus acht Codemodulen oder Bits zusammensetzt. Es sei bemerkt, dass diese Terminologie von derjenigen der Codierungstheorie abweicht, in der die Reed-Solomon-Fehlerkorrektur eigentlich zu Hause ist. In der Codierungstheorie würde ein Codewort als Symbol bezeichnet.

In einem Schritt S1 wird ein Bild mit einem optischen Code 20 beziehungsweise einem potentiellen optischen Code oder Codekandidat aufgenommen. Durch an sich bekannte Vorverarbeitungsschritte wird daraus ein rechteckiger, achsenorientierter Ausschnitt gewonnen, der den optischen Code 20 abdeckt und auf den sich die weitere Erkennung beschränken kann.

In Schritten S2 und S3 teilt sich das Ablaufdiagramm in zwei Pfade, die nacheinander oder parallel zueinander abgearbeitet werden können, beziehungsweise es kann auch Ausführungsformen geben, in denen nur einer der Pfade vorhanden ist. Störstellen 30 werden folglich anhand eines Kantenkriteriums und/oder eines Binarisierungskriteriums erkannt. Das Kantenkriterium findet größere kantenlose Bereiche, die insbesondere auf das Fehlen von Codemodulen aufgrund einer Auslöschung (Erasure) hindeuten, während das Binarisierungskriterium mit Kontrastarmut zusammenhängt und Bereiche findet, in denen die Unterscheidung zwischen hell und dunkel nicht verlässlich ist und demnach eine erhöhte Wahrscheinlichkeit einer Fehlbinarisierung besteht.

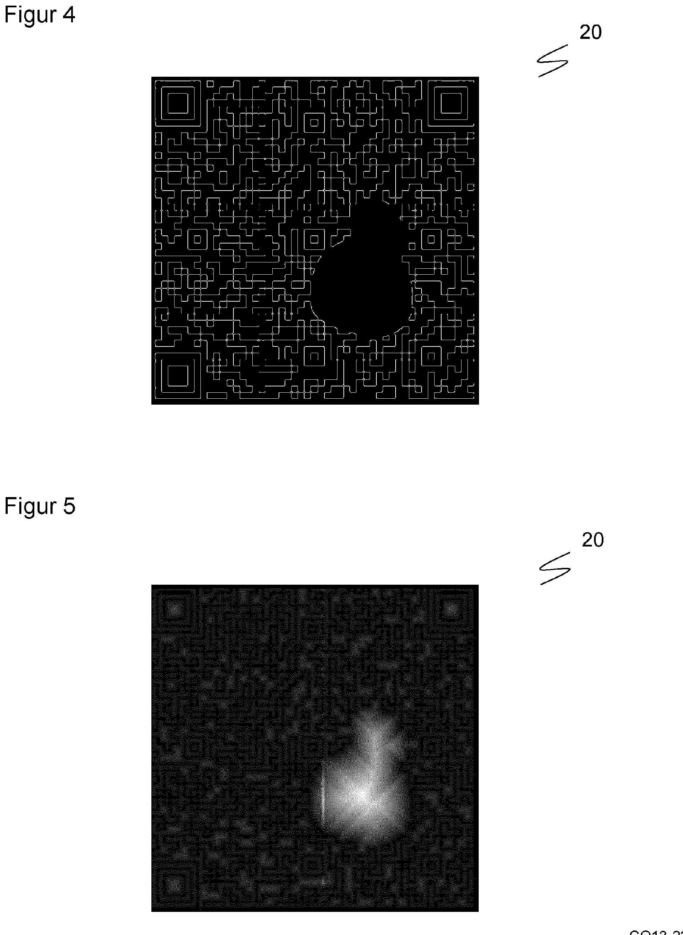

In einem Schritt S4 erfolgt zur Bewertung mit dem Kantenkriterium eine Kantendetektion. Vorzugsweise wird zuvor künstliche Unschärfe erzeugt, um Rauschen auszuwaschen und nur signifikante Kanten zu erhalten. Dafür eignet sich beispielsweise ein Gaußfilter, dessen Breite abhängig von der Modulgröße und dem Ausmaß des Rauschens gewählt wird, damit tatsächlich nur Rauschartefakte und nicht Codemodule verwaschen werden. Ein möglicher Kantendetektor, der so vorgeht, ist der Canny-Algorithmus, wobei auch andere an sich bekannte Kantendetektoren einsetzbar sind. Figur 4 zeigt eine Darstellung eines Kantenbildes zu dem optischen Code gemäß Figur 2.

Kanten können je nach Ausführungsform in einem Grauwertbild erkannt werden, oder es werden die Modulübergänge in einem binarisierten Bild als Kanten verwendet. Weiterhin ist denkbar, die Anwendung des Kantenkriteriums auf Modulabtastpunkte zu beschränken. Es werden dann nicht alle Bildpunkte betrachtet, sondern nur einer oder wenige repräsentative Bildpunkte je Codemodul. Das Raster solcher Modulabtastpunkte entsprechend den Codemodulen lässt sich aus der Modulgröße ableiten.

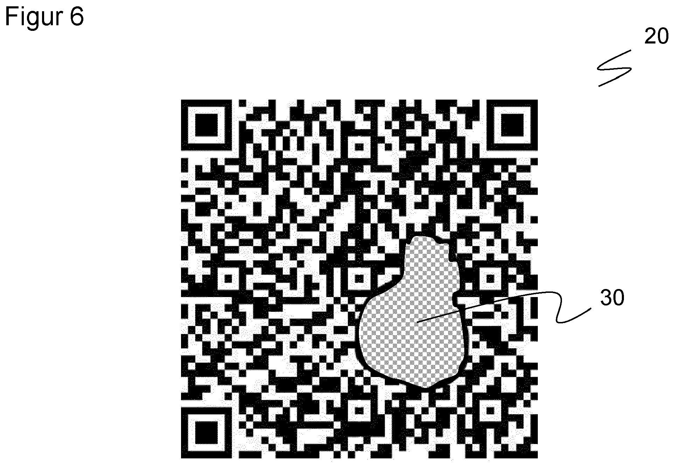

In einem Schritt S5 wird aus dem Kantenbild je Bildpunkt der Abstand zu der nächsten Kante berechnet. Erneut kann dies auf alle Bildpunkte oder nur auf Modulabtastpunkte angewandt werden. Beispielsweise wird dazu die Distanztransformation nach Rosenfeld und Pfaltz verwendet, wobei auch andere Verfahren möglich sind. Figur 5 zeigt eine Darstellung einer auf das Kantenbild gemäß Figur 4 angewandten Distanztransformation, wobei in dieser Darstellung hellere Bildpunkte für größere Abstände stehen. Je heller also ein Bildpunkt ist, umso größer ist ein kantenloser Bereich, in dem dieser Bildpunkt liegt. Somit kann eine vorzugsweise von der Modulgröße abhängige Schwelle angesetzt werden, um Störstellen 30 gemäß dem Kantenkriterium aufzufinden. Die Schwelle sollte hoch genug sein, um Störstellen 30 von regulären Häufungen gleichartiger Codemodule zu unterscheiden. Figur 6 zeigt eine Illustration der in dem optischen Code 20 gemäß Figur 2 erkannten Störstelle 30. Zu den gefundenen Störstellen 30 wird vorzugsweise auch ein jeweiliger Konfidenzwert bestimmt, der die Verlässlichkeit bewertet, dass dies tatsächlich eine Störstelle 30 ist, in dem Sinne, dass hier tatsächlich ein Codewort aufgrund einer Störstelle 30 nicht verlässlich lesbar ist. Dazu wird insbesondere mit der Wahrscheinlichkeit verglichen, dass regulär untereinander gleichartige Codemodule angehäuft sind, wie unten noch erläutert.

In einem Schritt S6 wird mit dem Binarisierungskriterium bewertet, ob die Grauwerte eines Codemoduls nahe an einer Binarisierungsschwelle liegen, denn in diesem Fall liegt eine erhöhte Wahrscheinlichkeit vor, dass dieses Codemodul falsch binarisiert ist. Die Binarisierungsschwelle ist der Grenzwert, der bei einer Binarisierung oder Erzeugung eines Schwarz-Weiß-Bildes aus einem Grauwertbild entscheidet, ob ein jeweiliger Bildpunkt als hell oder dunkel klassifiziert wird. Die Binarisierungsschwelle kann beispielsweise aus einer Helligkeits- oder Grauwerteverteilung abgeleitet werden. Damit lässt sich zu der Binarisierungsschwelle auch eine Schwankungsbreite oder Standardabweichung angeben. Vorzugsweise wird keine globale Binarisierungsschwelle ermittelt, obwohl das möglich wäre, sondern eine jeweilige lokale Binarisierungsschwelle für eine Nachbarschaft eines betrachteten Codemoduls, entsprechendes gilt für die Schwankungsbreite. An der Schwankungsbreite, beispielsweise x Standardabweichungen mit x ≤ 1, x ≤ 0,5 oder dergleichen, lässt sich dann messen, ob sich die Grauwerte eines Codemoduls signifikant von der Binarisierungsschwelle unterscheiden. Als Konfidenzwert kann zusätzlich angegeben werden, wie groß der Abstand zu der Binarisierungsschwelle ist.

In einem Schritt S7 werden die gefundenen Störstellen 30, die zunächst in einem Codemodul lokalisiert sind, einem Codewort zugeordnet. Dies ergibt sich aus dem jeweiligen Codestandard und wird daher nicht näher beschrieben. Es ist also zu diesem Zeitpunkt bekannt, welche Codewörter in wie vielen Codemodulen von Störstellen 30 betroffen sind, zudem welches Kriterium bei welcher Konfidenz die Störstelle 30 beziehungsweise ein von einer Störstelle betroffenes Codewort erkannt hat.

In einem Schritt S8 werden die Konfidenzwerte verwendet, um $r_{max}$ zu korrigierende Codewörter zu finden. Dabei entspricht $r_{max}$ vorzugsweise der maximalen Anzahl von Codemodulen, die von einer Störstelle 30 betroffen sind und mit denen ein nachfolgendes Fehlerkorrekturverfahrens oder insbesondere Reed-Solomon-Verfahren noch zurechtkommt. Was das heißt, wird im Anschluss noch näher erläutert. Zunächst soll aber auf die Priorisierung und die Konfidenzwerte eingegangen werden. Für das Kantenkriterium kann als Konfidenz 50% pro Codemodul angenommen werden, was mit der Basiswahrscheinlichkeit korrespondiert, dass ein jedes Codemodul hell oder dunkel ist. Für $n_1$ von einer Störstelle 30 betroffene Codemodule ergibt sich daraus die Formel $1 - \left(\frac{1}{2}\right)^{n_1}$. Für das Binarisierungskriterium kann der linear oder nichtlinear in eine Wahrscheinlichkeit reskalierte Abstand zu der Binarisierungsschwelle die Konfidenz für ein einzelnes Codemodul angeben, dass ein Binarisierungsfehler vorliegt, mit umso höherer Wahrscheinlichkeit, je näher das Codemodul der Binarisierungsschwelle kommt. Für ein Codewort werden die Konfidenzen seiner Codemodule durchmultipliziert. Haben in einem Codewort beide Kriterien angeschlagen, so werden die Konfidenzen kombiniert.

Nun kann eine Mindestkonfidenz vorgegeben werden, um Codewörter zu erhalten, die mit hinreichender Verlässlichkeit von einer Störstelle 30 betroffen sind. Darunter kann dann eine Auswahl von höchstens $r_{max}$ Codewörtern getroffen werden, vorzugsweise diejenigen mit größter Konfidenz, aber es sind auch andere Auswahlen einschließlich einer zufälligen Auswahl vorstellbar. Insbesondere können für wiederholte Leseversuche unterschiedliche Auswahlen getroffen werden.

Der Parameter $r_{max}$ ergibt sich aus der Fehlerkorrekturkapazität. Ein (n, k) Reed-Solomon-Code der Nachrichtenlänge n und einer Datenlänge k < n weist dementsprechend n - k Fehlerkorrekturwörter auf. Werden darin r Störstellen 30 beziehungsweise von einer Störstelle 30 betroffene Codewörter markiert, entspricht dies bezüglich der Decodiersicherheit einem (n - r, k) Reed-Solomon-Code. Bei r = n - k gibt es also keine Fehlerprüfung mehr. Es dürfen daher maximal $r_{max} = n - k - 2$ Störstellen 30 beziehungsweise davon betroffene Codewörter markiert werden, wobei die Grenze je nach Blocklänge aus Erfahrungswerten eventuell auch konservativer gesetzt wird. Die Grenze gilt bei Codes mit mehreren Fehlerkorrekturblöcken für jeden Block getrennt.

In einem Schritt S9 wird nun versucht, den optischen Code 20 mit einem Fehlerkorrekturverfahren zu lesen. In Kenntnis der Störstellen 30 beziehungsweise der davon betroffenen Codewörter kann das Fehlerkorrekturverfahren doppelt so viele Fehler korrigieren, da keine Korrekturwörter für das Lokalisieren von Fehlern verbraucht werden. Der Leseversuch führt im Idealfall in einem Schritt S10 zum Erfolg, der optische Code 20 wird gelesen. Schlägt der Leseversuch fehl, so können noch weitere Leseversuche unternommen werden, sofern die Anwendung dafür noch Decodierzeit bereitstellt. Insbesondere kann dafür im Schritt S8 eine andere Auswahl von Störstellen 30 beziehungsweise davon betroffener Codewörter getroffen werden. Ist die Decodierzeit aufgebraucht oder gibt es keine sinnvollen weiteren Möglichkeiten für einen Leseversuch, so bleibt der optische Code 20 in einem Schritt S11 unlesbar, und es kann ein entsprechender Lesefehler ausgegeben werden.

Angelehnt an die einleitend genannte Arbeit von Isaac Sofair lässt sich die Wahrscheinlichkeit für eine Fehlkorrektur berechnen. Zum Beispiel ergibt sich für einen QR-Code der Version 3 mit Fehlerkorrekturlevel H, dass für r = n - k - 2 die Wahrscheinlichkeit für eine Fehlkorrektur ca. 0,012% beträgt. Für r = n - k - 4 beträgt die Wahrscheinlichkeit schon nur noch etwa eine Fehlkorrektur je 100 Millionen Decodierungen. Dies ist für die meisten Codelese-Anwendungen bei Weitem ausreichend. Im konkreten Fall des QR-Codes der Version 3 mit Fehlerkorrekturlevel H mit 22 Fehlerkorrekturwörtern pro Block und 2 Blöcken erlaubt das die Markierung von bis zu 18 Störstellen 30 pro Block und somit insgesamt 36 Störstellen 30 beziehungsweise davon betroffener Codewörter.

Es sei noch betont, dass das Ablaufdiagramm gemäß Figur 3 eine bevorzugte Ausführungsform darstellt. Es ist nicht erforderlich, alle Schritte durchzuführen. Insbesondere kann nur eines der Kriterien im oberen Teil geprüft werden oder auf die Bewertung mit einer Konfidenz verzichtet werden. Im letzteren Fall werden insbesondere einfach die gefundenen Störstellen 30 beziehungsweise davon betroffenen Codewörter markiert, ohne darin nochmals auszuwählen oder zu priorisieren.

**Patentansprüche**

1. Verfahren zum Lesen eines optischen Codes (20) mit einer ersten Vielzahl von Codewörtern aus jeweils einer zweiten Vielzahl von Codemodulen, mit den Schritten

   Aufnehmen von Bilddaten mit dem optischen Code (20), wobei Codemodule in den Bilddaten eine Modulgröße aufweisen, die angibt, wie groß ein Codemodul in Bildpunkten der Bilddaten ist,
   Bestimmen von Störstellen (30), wobei eine Störstelle (30) ein Bereich in den Bilddaten ist, in dem mindestens ein Codemodul nicht erkennbar ist, und Auswerten der Bilddaten mit Lesen der Codewörter,
   **dadurch gekennzeichnet,**
   **dass** die Störstellen (30) anhand eines Kantenkriteriums und/oder eines Binarisierungskriteriums bestimmt werden,
   wobei das Kantenkriterium bewertet, ob ein Codemodul in einem kantenfreien Bereich der Bilddaten liegt, der größer ist als ein vorgegebenes Vielfaches der Modulgröße, wofür eine Kantendetektion in den Bilddaten vorgenommen wird, für mindestens einen Bildpunkt je Position eines Codemoduls der Abstand zu der nächsten Kante bestimmt wird und das Kantenkriterium in dem jeweiligen Bildpunkt als erfüllt gilt, wenn der Abstand mindestens einem vorgegebenen Abstand entspricht,
   und wobei das Binarisierungskriterium bewertet, ob ein Codemodul mit Grauwerten nahe einer Binarisierungsschwelle aufgenommen ist, wobei das Binarisierungskriterium an einem Bildpunkt als erfüllt gilt, wenn der Grauwert des Bildpunktes innerhalb einer erwarteten Schwankungsbreite um die Binarisierungsschwelle bleibt.

2. Verfahren nach Anspruch 1,
   wobei vor der Kantendetektion künstlich eine Unschärfe erzeugt wird.

3. Verfahren nach Anspruch 1 oder 2,
   wobei das Binarisierungskriterium an einem Bildpunkt als erfüllt gilt, wenn der Grauwert des Bildpunktes innerhalb eines Bruchteils einer Standardabweichung der Grauwerte von Bildpunkten in einer Nachbarschaft des Bildpunktes bleibt.

4. Verfahren nach einem der vorhergehenden Ansprüche,
   wobei der optische Code (20) mit einem Fehlerkorrekturverfahren gelesen wird.

5. Verfahren nach Anspruch 4,

wobei dem Fehlerkorrekturverfahren als zusätzliche Eingangswerte die Störstellen (30) mitgeteilt werden.

6. Verfahren nach Anspruch 5,
   wobei dem Fehlerkorrekturverfahren eine Anzahl von Störstellen (30) betroffene Codewörter entsprechend einer Fehlerkorrekturkapazität des Fehlerkorrekturverfahrens mitgeteilt werden.

7. Verfahren nach Anspruch 5 oder 6,
   wobei mehrere Leseversuche mit dem Fehlerkorrekturverfahren erfolgen und dem Fehlerkorrekturverfahren in den Leseversuchen jeweils unterschiedliche von Störstellen (30) betroffene Codewörter mitgeteilt werden.

8. Verfahren nach einem der Ansprüche 5 bis 7,
   wobei nach einem Konfidenzwert entschieden wird, welche von Störstellen (30) betroffene Codewörter dem Korrekturverfahren mitgeteilt werden.

9. Verfahren nach Anspruch 8,
   wobei der Konfidenzwert aus dem Kantenkriterium und/oder dem Binarisierungskriterium berechnet wird.

10. Verfahren nach Anspruch 9,
    wobei das Kantenkriterium nach der Formel $1 - \left(\frac{1}{2}\right)^{n_1}$ zu dem Konfidenzwert beiträgt, wobei $n_1$ die Anzahl der von einer Störstelle (30) betroffenen Codemodule ist.

11. Verfahren nach Anspruch 9 oder 10,
    wobei das Binarisierungskriterium umso mehr zu dem Konfidenzwert beiträgt, je näher der Grauwert des mit dem Binarisierungskriterium betrachteten Bildpunktes an der Binarisierungsschwelle liegt.

12. Optoelektronischer Codeleser (10) mit mindestens einem Lichtempfangselement (24) zur Erzeugung von Bilddaten aus Empfangslicht und mit einer Steuer- und Auswertungseinheit (26), in der ein Verfahren zum Lesen von optischen Codes (20) nach einem der vorhergehenden Ansprüche implementiert ist.

**Claims**

1. A method of reading an optical code (20) having a first plurality of code words from a respective second plurality of code modules, said method comprising the steps

   recording image data having the optical code (20), wherein code modules in the image data have a module size that indicates how large a code module is in picture elements of the image data;

determining defects (30), wherein a defect (30) is a region in the image data in which at least one code module is not recognizable; and

evaluating the image data by reading the code words,

**characterized in that**

the defects (30) are determined using an edge criterion and/or a binarization criterion,

wherein the edge criterion evaluates whether there is a code module in an edge-free region of the image data that is larger than a specified multiple of the module size, for which purpose an edge detection in the image data is carried out, the distance from the next edge is determined for at least one picture element per position of a code module, and the edge criterion is deemed satisfied in the respective picture element when the distance corresponds to at least a specified distance,

and wherein the binarization criterion evaluates whether a code module having gray scale values close to a binarization threshold has been recorded, wherein the binarization criterion is deemed satisfied at a picture element when the gray scale value of the picture element remains within an expected fluctuation range around the binarization threshold.

2. A method in accordance with claim 1, wherein a blur is artificially produced before the edge detection.

3. A method in accordance with claim 1 or 2, wherein the binarization criterion is deemed satisfied at a picture element when the gray scale value of the picture element remains within a fraction of a standard deviation of the gray scale values of picture elements in a neighborhood of the picture element.

4. A method in accordance with any one of the preceding claims, wherein the optical code (20) is read using an error correction process.

5. A method in accordance with claim 4, wherein the defects (30) are communicated to the error correction process as additional input values.

6. A method in accordance with claim 5, wherein a number of code words affected by defects (30) corresponding to an error correction capacity of the error correction process is communicated to the error correction process.

7. A method in accordance with claim 5 or 6, wherein a plurality of reading attempts are made with the error correction process and respective different code words affected by defects (30) are communicated to the error correction process in the reading attempts.

8. A method in accordance with any one of the claims 5 to 7, wherein a decision as to which code words affected by defects (30) are communicated to the correction process is made according to a confidence value.

9. A method in accordance with claim 8, wherein the confidence value is calculated from the edge criterion and/or the binarization criterion.

10. A method in accordance with claim 9, wherein the edge criterion in accordance with the formula $1 - \left(\frac{1}{2}\right)^{n_1}$ contributes to the confidence value, with $n_1$ being the number of code modules affected by a defect (30).

11. A method in accordance with claim 9 or 10, wherein the binarization criterion contributes the more to the confidence value, the closer the gray scale value of the picture element looked at with the binarization criterion is to the binarization threshold.

12. An optoelectronic code reader (10) having at least one light reception element (24) for generating image data from received light and having a control and evaluation unit (26) in which a method of reading optical codes (20) in accordance with any one of the preceding claims is implemented.

**Revendications**

1. Procédé de lecture d'un code optique (20) comportant une première pluralité de mots de code provenant chacun d'une deuxième pluralité de modules de code, comprenant les étapes consistant à

enregistrer des données d'image avec le code optique (20), les modules de code dans les données d'image ayant une taille de module qui indique la taille d'un module de code en points d'image des données d'image, déterminer des zones perturbées (30), une zone perturbée (30) étant une zone dans les données d'image dans laquelle au moins un module de code n'est pas reconnaissable, et

évaluer les données d'image avec lecture des mots de code,

**caractérisé en ce que**

les zones perturbées (30) sont déterminées à l'aide d'un critère de bords et/ou d'un critère de binarisation,
sachant que
le critère de bords évalue si un module de code se trouve dans une zone des données d'image exempte de bords qui est supérieure à un multiple prédéfini de la taille du module, ce pourquoi une détection de bords est effectuée dans les données d'image, la distance par rapport au bord le plus proche est déterminée pour au moins un point d'image par position d'un module de code, et le critère de bords est considéré comme état satisfait dans le point d'image respectif si la distance correspond au moins à une distance prédéfinie,
et le critère de binarisation évalue si un module de code avec des valeurs de gris proches d'un seuil de binarisation est enregistré, le critère de binarisation étant considéré comme étant satisfait au niveau d'un point d'image si la valeur de gris du point d'image reste dans une plage de variation attendue autour du seuil de binarisation.

2. Procédé selon la revendication 1,
dans lequel un flou est généré artificiellement avant la détection des bords.

3. Procédé selon la revendication 1 ou 2,
dans lequel le critère de binarisation est considéré comme étant satisfait au niveau d'un point d'image si la valeur de gris du point d'image reste au sein d'une fraction d'un écart type des valeurs de gris des points d'image au voisinage du point d'image.

4. Procédé selon l'une des revendications précédentes,
dans lequel le code optique (20) est lu à l'aide d'un procédé de correction d'erreurs.

5. Procédé selon la revendication 4,
dans lequel les zones perturbées (30) sont communiquées au procédé de correction d'erreurs en tant que valeurs d'entrée supplémentaires.

6. Procédé selon la revendication 5,
dans lequel un nombre de mots de code affectés par des zones perturbées (30) est communiqué au procédé de correction d'erreurs en fonction d'une capacité de correction d'erreurs du procédé de correction d'erreurs.

7. Procédé selon la revendication 5 ou 6,
dans lequel plusieurs tentatives de lecture sont effectuées avec le procédé de correction d'erreurs, et différents mots de code affectés par des zones perturbées (30) sont communiqués au procédé de correction d'erreurs lors des tentatives de lecture.

8. Procédé selon l'une des revendications 5 à 7,
dans lequel une valeur de confiance permet de décider quels mots de code affectés par des zones perturbées (30) sont communiqués au procédé de correction.

9. Procédé selon la revendication 8,
dans lequel la valeur de confiance est calculée à partir du critère de bords et/ou du critère de binarisation.

10. Procédé selon la revendication 9,
dans lequel le critère de bords contribue à la valeur de confiance selon la formule $1 - \left(\frac{1}{2}\right)^{n_1}$, $n_1$ étant le nombre de modules de code affectés par une zone perturbée (30).

11. Procédé selon la revendication 9 ou 10,
dans lequel le critère de binarisation contribue d'autant plus à la valeur de confiance que la valeur de gris du point d'image considéré avec le critère de binarisation est proche du seuil de binarisation.

12. Lecteur de code optoélectronique (10) comprenant au moins un élément de réception de lumière (24) pour générer des données d'image à partir de la lumière reçue et comprenant une unité de commande et d'évaluation (26) dans laquelle est mis en œuvre un procédé de lecture de codes optiques (20) selon l'une des revendications précédentes.

Figur 1

Figur 2

Figur 3

S1 — Aufnahme von Bild mit optischem Code

S2 — Kantenkriterium für Störstellen

S3 — Binarisierungskriterium für Störstellen

S4 — Kantendetektion

S6 — Grauwerte nahe an Binarisierungsschwelle?

S5 — Distanztransformation

Mögliche Störstellen Konfidenz          Mögliche Störstellen Konfidenz

S7 — Von möglichen Störstellen betroffene Codewörter bestimmen

S8 — Daraus anhand Konfidenz Auswahl von $r_{max}$ zu korrigierenden Codewörtern

S9 — Code lesen mit Fehlerkorrekturverfahren in Kenntnis der Auswahl

erfolgreich          nicht erfolgreich

Timeout

S10 — Code gelesen

S11 — Code nicht lesbar

Figur 4

20

Figur 5

20

Figur 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 3428835 A1
- US 6685095 B2
- EP 1383063 A1

### In der Beschreibung aufgeführte Nicht-Patentliteratur

- Probability of miscorrection for reed-solomon codes. **SOFAIR, ISAAC**. Proceedings International Conference on Information Technology: Coding and Computing. IEEE, 2000